(19) **Europäisches Patentamt / European Patent Office / Office européen des brevets**

(11) **EP 2 518 907 A2**

(12) **EUROPEAN PATENT APPLICATION**
published in accordance with Art. 153(4) EPC

(43) Date of publication:
**31.10.2012 Bulletin 2012/44**

(51) Int Cl.:
***H04B 7/06*** (2006.01)

(21) Application number: **10839731.6**

(22) Date of filing: **20.12.2010**

(86) International application number:
**PCT/KR2010/009110**

(87) International publication number:
**WO 2011/078534 (30.06.2011 Gazette 2011/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2009 US 288341 P**
**11.05.2010 KR 20100043821**

(71) Applicant: **LG Electronics Inc.**
**Seoul 150-721 (KR)**

(72) Inventors:
• **HAN, Seung Hee**
**Anyang-si**
**Gyeonggi-do 431-080 (KR)**

• **KO, Hyun Soo**
**Anyang-si**
**Gyeonggi-do 431-080 (KR)**
• **CHUNG, Jae Hoon**
**Anyang-si**
**Gyeonggi-do 431-080 (KR)**
• **LEE, Moon Il**
**Anyang-si**
**Gyeonggi-do 431-080 (KR)**

(74) Representative: **Frenkel, Matthias Alexander et al**
**Wuesthoff & Wuesthoff**
**Patent- und Rechtsanwälte**
**Schweigerstrasse 2**
**81541 München (DE)**

(54) **METHOD AND APPARATUS FOR TRANSMITTING UPLINK DATA AND CONTROL INFORMATION IN A WIRELESS MOBILE COMMUNICATION SYSTEM THAT SUPPORTS MIMO ANTENNAS**

(57) The present invention provides a method for transmitting uplink data and control information in a wireless mobile communication system that supports multiple input multiple output (MIMO) antennas. The method comprises: setting a rank of uplink control information to a rank of uplink data; multiplexing a first control information item output of the control information with the data; channel interleaving the multiplexed output with control information other than the first control information item out of the said control information; and transmitting the interleaved signal.

FIG. 16

EP 2 518 907 A2

## Description

## TECHNICAL FIELD

The present invention relates to a wireless communication system, and more particularly, to an apparatus for transmitting uplink data and control information in a wireless mobile communication system supporting MIMO antennas and method thereof.

## BACKGROUND ART

In a mobile communication system, a user equipment may receive information in downlink from a base station and may transmit information in uplink as well. The informations transmitted or received by the user equipment may include data and various kinds of control informations. And, various physical channels exist in accordance with a type and usage of the information transmitted or received by the user equipment.

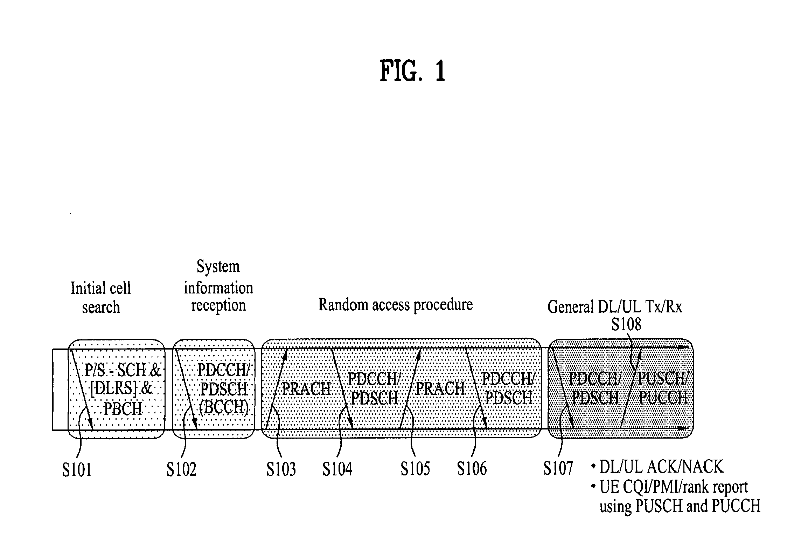

FIG. 1 is a diagram for explaining physical channels used for 3GPP system and a signal transmission using the same.

If a power of a user equipment is turned on or the user equipment enters a new cell, the user equipment may perform an initial cell search job for matching synchronization with a base station and the like [S101]. For this, the user equipment may receive a primary synchronization channel (P-SCH) and a secondary synchronization channel (S-SCH) from the base station, may match synchronization with the base station and may then obtain information such as a cell ID and the like. Subsequently, the user equipment may receive a physical broadcast channel from the base station and may be then able to obtain intra-cell broadcast information. Meanwhile, the user equipment may receive a downlink reference signal (DL RS) and may be then able to check a DL channel state.

Having completed the initial cell search, the user equipment may receive a physical downlink control channel (PDCCH) and a physical downlink shared control channel (PDSCH) according to the physical downlink control channel (PDCCH) and may be then able to obtain a detailed system information [S102].

Meanwhile, the user equipment failing to complete an access to the base station may be able to perform a random access procedure (RACH) on the base station to complete the access [S103 to S106]. For this, the user equipment may transmit a specific sequence as a preamble via a physical random access channel (PRACH) [S103] and may be then able to receive a response message via PDCCH and a corresponding PDSCH in response to the random access [S104]. In case of a contention based random access, it may be able to perform a contention resolution procedure such as a transmission S105 of an additional physical random access channel and a channel reception S106 of a physical downlink control channel and a corresponding physical downlink shared channel.

Having performed the above mentioned procedures, the user equipment may be able to perform a PDCCH/PDSCH reception S107 and a PUSCH/PUCCH (physical uplink shared channel/physical uplink control channel) transmission S108 as a general uplink/downlink signal transmission procedure.

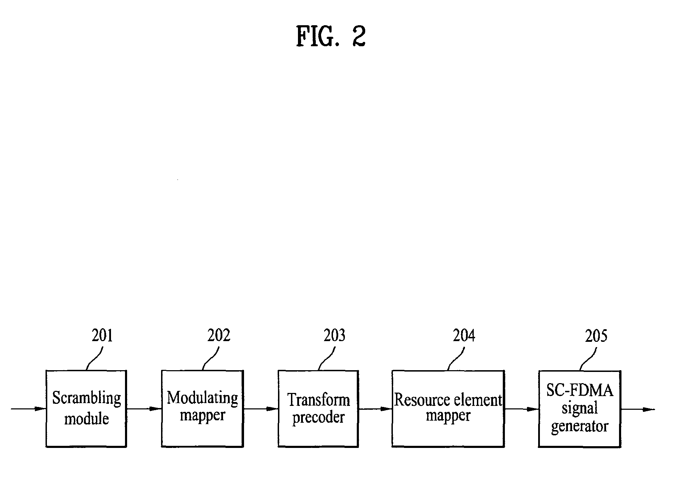

FIG. 2 is a diagram for describing a signal processing process for a user equipment to transmit a UL signal.

First of all, in order to transmit a UL signal, a scrambling module 210 of a user equipment may be able to scramble a transmission signal using a UE-specific scrambling signal. This scrambled signal is inputted to a modulating mapper 220 and is then modulated into a complex symbol by BPSK (binary phase shift keying), QPSK (quadrature phase shift keying) or 16 QAM (quadrature amplitude modulation) in accordance with a type and/or channel state of the transmission signal. Subsequently, the complex symbol is processed by a transform precoder 230 and is then inputted to a resource element mapper 240. In this case, the resource element mapper 240 may be able to map the complex symbol into a time-frequency resource element that will be actually used for a transmission. This processed signal is inputted to an SC-FDMA signal generator 250 and may be then transmitted to a base station via antenna.

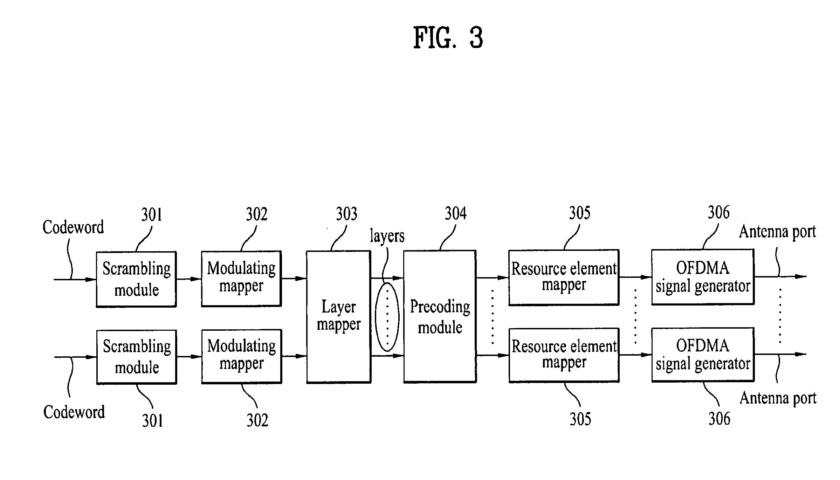

FIG. 3 is a diagram for describing a signal processing process for a base station to transmit a DL signal.

In 3GPP LTE system, a base station may be able to transmit at least one codeword in DL. Hence, each of the at least one codeword can be processed into a complex symbol by a scrambling module 310 and a modulating mapper 302 like the uplink shown in FIG. 2. The complex symbol may be then mapped to a plurality of layers by a layer mapper 303. Each of a plurality of the layers may be then assigned to each transmitting antenna by being multiplied by a prescribed precoding matrix selected by a precoding module 304 in accordance with a channel state. A per-antenna transmission signal processed in the above manner is mapped to a time-frequency resource element, which will be used for a transmission, by each resource element mapper 305, enters an OFDM (orthogonal frequency division multiple access) signal generator 306, and may be then transmitted via a corresponding antenna.

If a user equipment in a mobile communication system transmits a signal in UL, it may cause a problem of PAPR (peak-to-average ratio) more serious than a case for a base station to transmit a signal in DL. Unlike the OFDMA scheme used for a DL signal transmission, as mentioned with reference to FIG. 2 and FIG. 3, a UL signal transmission may use SC-FDMA (single carrier-frequency division multiple access) scheme.

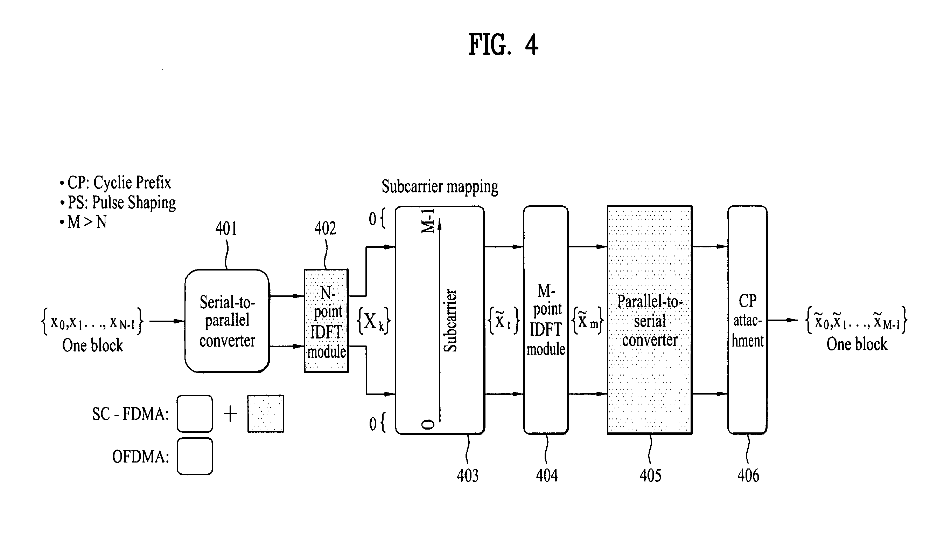

FIG. 4 is a diagram for describing SC-FDAM scheme for a UL signal transmission and OFDMA scheme for a DL signal transmission in a mobile communication system.

First of all, a user equipment for a UL signal transmission and a base station for a DL signal transmission are identical to each other in including a serial-to-parallel converter 410, a subcarrier mapper 403, an M-point IDFT module 404 and a CP (cyclic prefix) adding module 406.

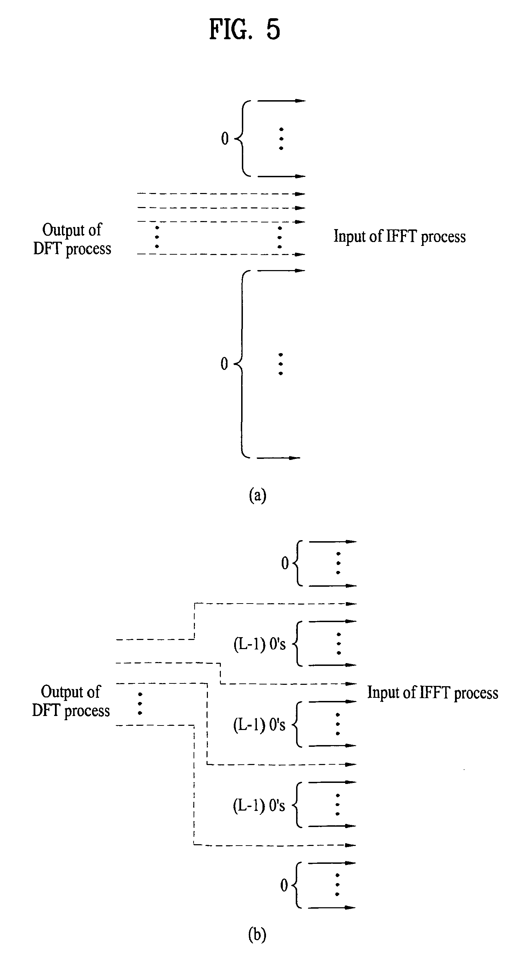

Yet, a user equipment for transmitting a signal by SC-FDMA scheme may additionally include a parallel-to-serial converter 405 and an N-point DFT module 402. And, the N-point DFT module 402 may be characterized in enabling a transmission signal to have a single carrier property by canceling out an IDFT processing effect of the M-point IDFT module 404. FIG. 5 is a diagram for describing a signal mapping scheme in frequency domain to meet a single carrier property in the frequency domain. FIG. 5 (a) shows a localized mapping scheme, while FIG. 5 (b) shows a distributed mapping scheme. Currently, the localized mapping scheme is defined by 3GPP LTE system.

In the following description, clustered SC-FDMA will be described as a modified form of SC-FDMA. First of all, the clustered SC-FDMA is characterized in dividing DFT process output samples in a subcarrier mapping process into subgroups and sequentially mapping the subgroups to subcarrier regions spaced apart from each other in an IFFT sample input unit, respectively, between a DFT process and an IFFT process. And, the clustered SC-FDMA may occasionally include a filtering process and a cyclic extension process.

In this case, the subgroup may be named a cluster. And, the cyclic extension may mean that a guard interval longer than a maximum delay spread of a channel is inserted between contiguous symbols to prevent mutual inter-symbol interference (ISI) while each subcarrier symbol is carried on a multi-path channel.

FIG. 6 is a diagram of a signal processing process for mapping DFT process output samples to a single carrier in the clustered SC-FDMA.

FIG. 7 and FIG. 8 are diagrams of a signal processing process for mapping DFT process output samples to a multicarrier in the clustered SC-FDMA. In particular, FIG. 6 shows an example of applying the clustered SC-FDMA in an intra-carrier and FIG. 7 and FIG. 8 shows examples of applying the clustered SC-FDMA in an inter-carrier.

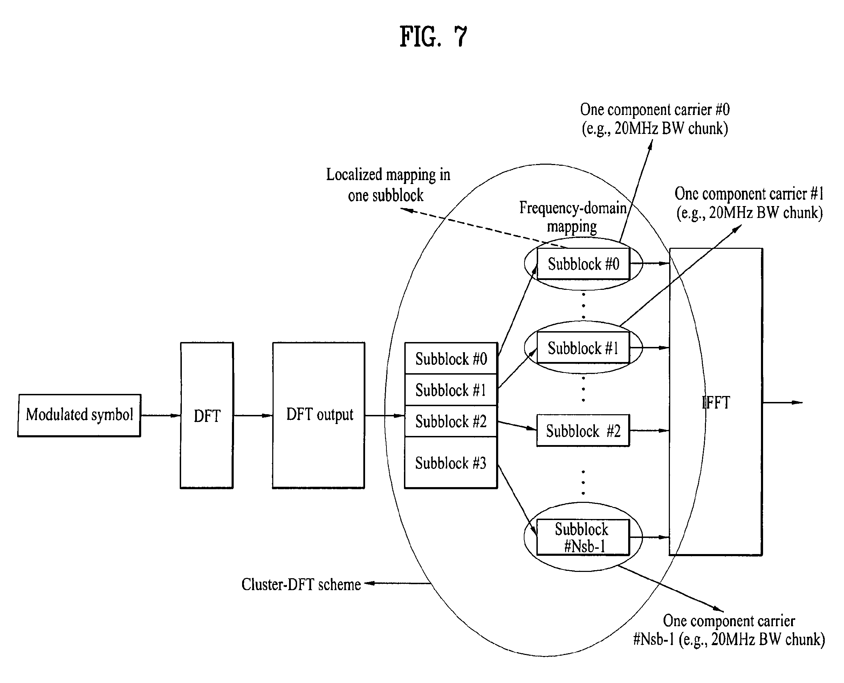

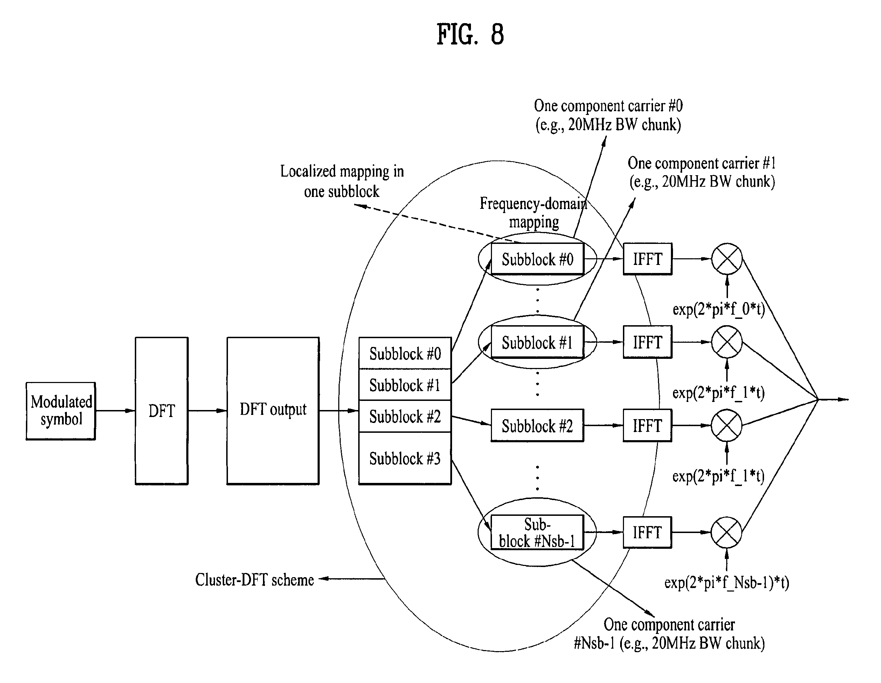

Moreover, FIG. 7 shows a case of generating a signal via a single IFFT block if a subcarrier spacing between component carriers contiguous to each other is aligned in a situation that component carriers contiguous to each other are allocated in a frequency domain. And, FIG. 8 shows a case of generating a signal via a plurality of IFFT blocks because component carriers are not contiguous to each other in a situation that component carriers are non-contiguously allocated in a frequency domain.

The clustered SC-FDMA may simply extend a DFT spreading of the conventional SC-FDMA and a frequency subcarrier mapping configuration of IFFT because a relation configuration between DFT and IFFT has a one-to-one relation by applying IFFTs of which number is equal to an arbitrary number of DFTs. And, the clustered SC-FDMA may be represented as NxSC-FDMA or NxDFT-s-OFDMA, which may be inclusively named segmented SC-FDMA according to the present invention.

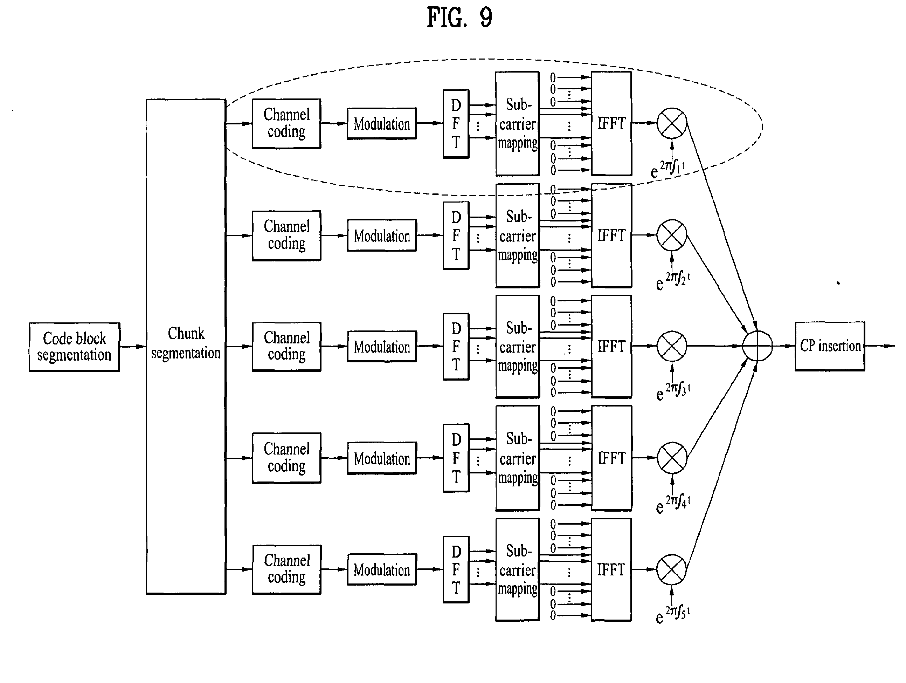

FIG. 9 is a diagram of a signal processing process in the segmented SC-FDMA. Referring to FIG. 9, the segmented SC-FDMA may be characterized in performing a DFP process by a group unit in a manner of binding all time-domain modulated symbols into N groups (N is an integer greater than 1) to mitigate a single carrier property condition.

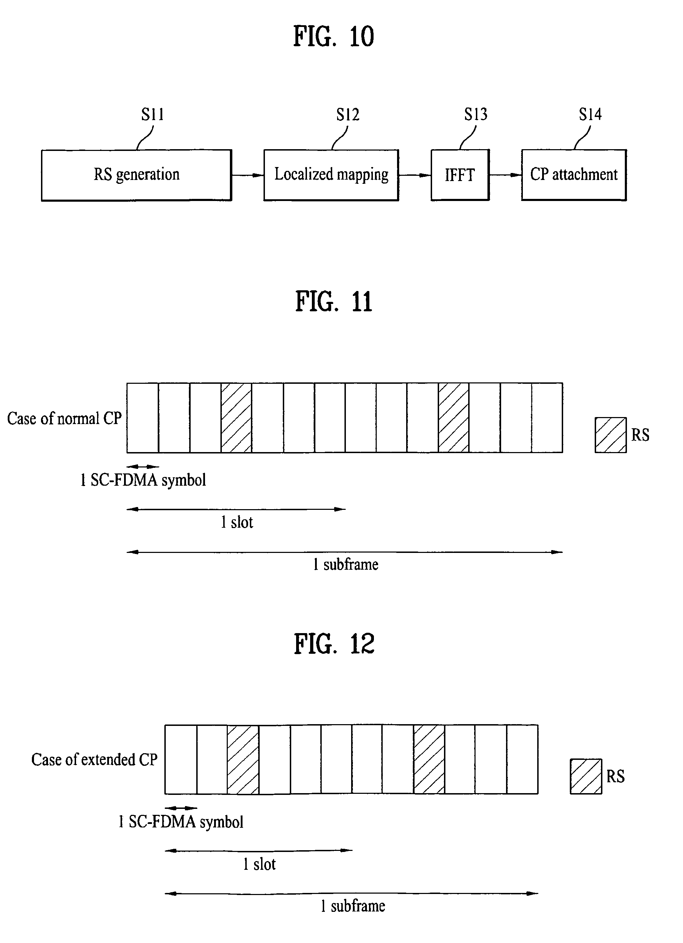

FIG. 10 is a diagram for describing a signal processing process for transmitting a reference signal (hereinafter abbreviated RS) in UL. Referring to FIG. 10, data is transmitted in a following manner. First of all, a signal is generated in time domain, transformed by a DFT precoder, frequency-mapped, and then transmitted via IFFT. Yet, RS is directly generated in frequency domain by skipping a step of entering a DFT precoder [S11], enters a localized mapping step S12, an IFFT step S13 and a CP (cyclic prefix) attaching step S14 sequentially, and is then transmitted.

FIG. 11 is a diagram for a structure of a subframe to transmit RS in case of a normal CP. And, FIG. 12 is a diagram for a structure of a subframe to transmit RS in case of an extended CP. Referring to FIG. 11, RS is carried on 4th OFDM symbol and 11th OFDM symbol. Referring to FIG. 12, RS is carried on 3rd OFDM symbol and 9th OFDM symbol.

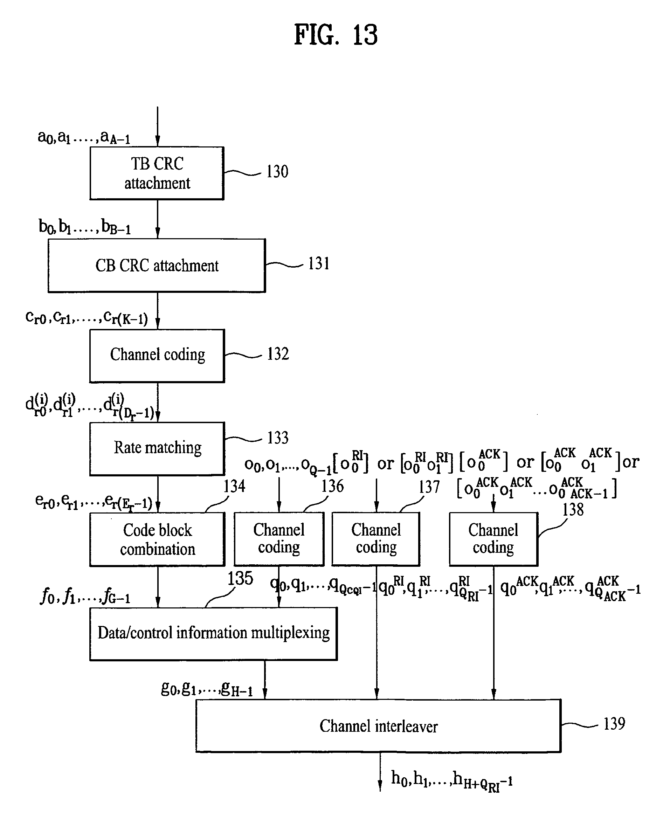

Meanwhile, a processing structure of a UL shared channel as a transport channel may be described as follows. FIG. 13 is a block diagram of a process for processing a transport channel for a UL shared channel. Referring to FIG. 13, after a CRC (cyclic redundancy check) for TB has been attached to a transport block (hereinafter abbreviated TB) supposed to be transmitted in UL [130], data information, which is multiplexed with control information, is divided into a plurality of code blocks (hereinafter abbreviated CB) in accordance with TB size and a CRC for CB is then attached to each of a plurality of the CBs [131]. Subsequently, channel coding is performed on a corresponding result value [132]. Moreover, after a rate matching has been performed on the channel-coded data [133], the CBs are combined together [S134]. The combined CBs are then multiplexed with CQI/PMI (channel quality information/precoding matrix index) [135].

Meanwhile, the CQI/PMI is channel-coded separately from the data [136]. The channel-coded CQI/PMI is then multiplexed with data [135].

Moreover, RI (rank indication) is channel-coded separately from the data [137].

ACK/NACK (acknowledgement/negative acknowledgement) is channel-coded separately from data, CQI/PMI and RI [138]. And, the multiplexed data and CQI/PMI, the separately channel-coded RI and the separately channel-coded ACK/NACK are channel-interleaved to generate an output signal [139].

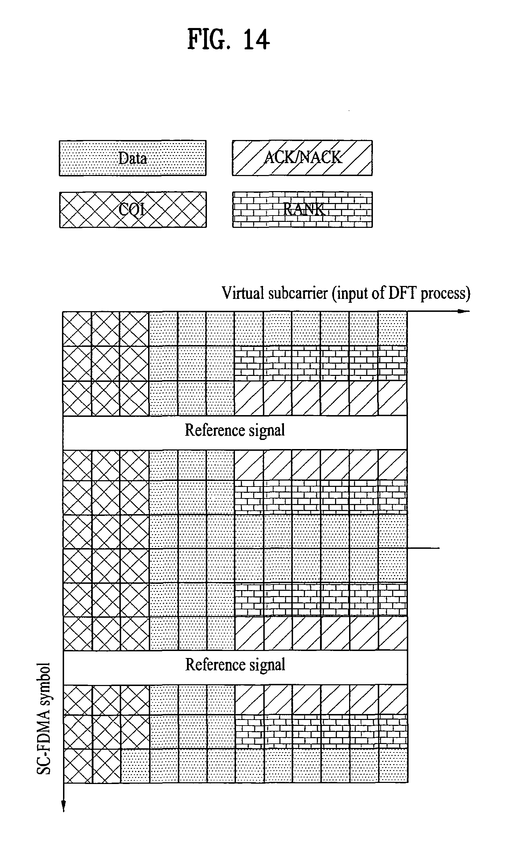

In the following description, a physical element (hereinafter abbreviated RE) for data and control channel in LTE uplink system may be explained. FIG. 14 is a diagram for describing a mapping method of physical resources for UL data and control channel transmission.

Referring to FIG. 14, CQI/PMI and data are mapped on RE by a time-first scheme. Encoded ACK/NACK is inserted around a demodulation reference signal (DM RS) by being perforated. RI is rate-matched next to an RE at which ACK/NACK is situated. Resources for the RI and the ACK/NACK may occupy maximum 4 SC-FDMA symbols.

As mentioned in the above description, it may be able to meet the single carrier property by multiplexing data with such UL control information (UCI) as CQI/PMI and the like. Hence, it may be able to accomplish a UL transmission that maintains a low CM (cubic metric).

In a system (e.g., LTE Rel-10) resulting from improving a legacy system, at least one transmission scheme selected from SC-FDMA and clustered DFTs OFDMA may be applicable to each component carrier of user equipment for a UL transmission and may be applicable together with a UL-MIMO (uplink-MIMO) transmission.

Meanwhile, regarding the UL transmission structure, a method of multiplexing data and UCI with each other together in a UL-MIMO transmission has not been discussed until now.

DISCLOSURE OF THE INVENTION

TECHNICAL TASK

A technical task supposed to be achieved by the present invention is to provide a method and apparatus for transmitting data and control information in a UL MIMO transmission by multiplexing the data and the control information together.

Technical tasks obtainable from the present invention are non-limited the above-mentioned technical task. And, other unmentioned technical tasks can be clearly understood from the following description by those having ordinary skill in the technical field to which the present invention pertains.

**TECHNICAL SOLUTION**

To achieve these and other advantages and in accordance with the purpose of the present invention, as embodied and broadly described, a method of transmitting an uplink signal, which is transmitted by a user equipment in a wireless mobile communication system supporting MIMO (multiple input multiple output), according to one embodiment of the present invention may include the steps of setting a rank of uplink control information to a rank of an uplink data, multiplexing a 1st control information in the uplink control information with the uplink data, channel-interleaving the multiplexed output with the uplink control information except the 1st control information in the uplink control information, and transmitting the interleaved signal to a base station using the MIMO.

The step of setting the rank of the uplink control information to the rank of the uplink data may be performed using repetition of a bit of the uplink control information.

The step of setting the rank of the uplink control information to the rank of the uplink data may be performed using a rate matching.

The 1st control information may include at least one of a channel quality information and a PMI.

The uplink control information except the 1st control information may include either a rank information or an ACK/NACK (acknowledgement/negative acknowledgement) information.

To further achieve these and other advantages and in accordance with the purpose of the present invention, a user equipment in a wireless mobile communication system supporting MIMO (multiple input multiple output) according to another embodiment of the present invention may include a transmitting/receiving unit transmitting an uplink signal to a base station using the MIMO, the transmitting/receiving unit receiving a downlink signal from the base station using the MIMO, a processing unit configured to process the downlink signal received from the base station and the uplink signal to transmit to the base station, and a memory unit connected to the processing unit to store an operating system program, an application program and a file related to the operating system program or the application program, wherein the processing unit may include a bit size control unit setting a rank of uplink control information to a rank of an uplink data, a multiplexing unit multiplexing a 1st control information in the uplink control information with the uplink data, and a channel interleaving unit channel-interleaving the multiplexed output with the uplink control information except the 1st control information in the uplink control information.

The bit size control unit may set the rank of the uplink control information to the rank of the uplink data by repeating a bit of the uplink control information. The bit size control unit may set the rank of the uplink control information to the rank of the uplink data using a rate matching.

The 1st control information may include at least one of a channel quality information and a PMI.

The uplink control information except the 1st control information may include either a rank information or an ACK/NACK (acknowledgement/negative acknowledgement) information.

## ADVANTAGEOUS EFFECTS

According to the present invention, when data and control information are transmitted in UL, a rank of the data and a rank of the control information are set equal to each other. Therefore, signaling overhead may be reduced and system performance may be raised.

Effects obtainable from the present invention are non-limited the above mentioned effect. And, other unmentioned effects can be clearly understood from the following description by those having ordinary skill in the technical field to which the present invention pertains.

## DESCRIPTION OF DRAWINGS

The accompanying drawings, which are included to provide a further understanding of the invention and are incorporated in and constitute a part of this application, illustrate embodiment(s) of the invention and together with the description serve to explain the principle of the invention.

FIG. 1 is a diagram for explaining physical channels used for 3GPP system and a signal transmission using the same.

FIG. 2 is a diagram for describing a signal processing process for a user equipment to transmit a UL signal.

FIG. 3 is a diagram for describing a signal processing process for a base station to transmit a DL signal.

FIG. 4 is a diagram for describing SC-FDAM scheme for a UL signal transmission and OFDMA scheme for a DL signal transmission in a mobile communication system.

FIG. 5 is a diagram for describing a signal mapping scheme in frequency domain to meet a single carrier property in the frequency domain.

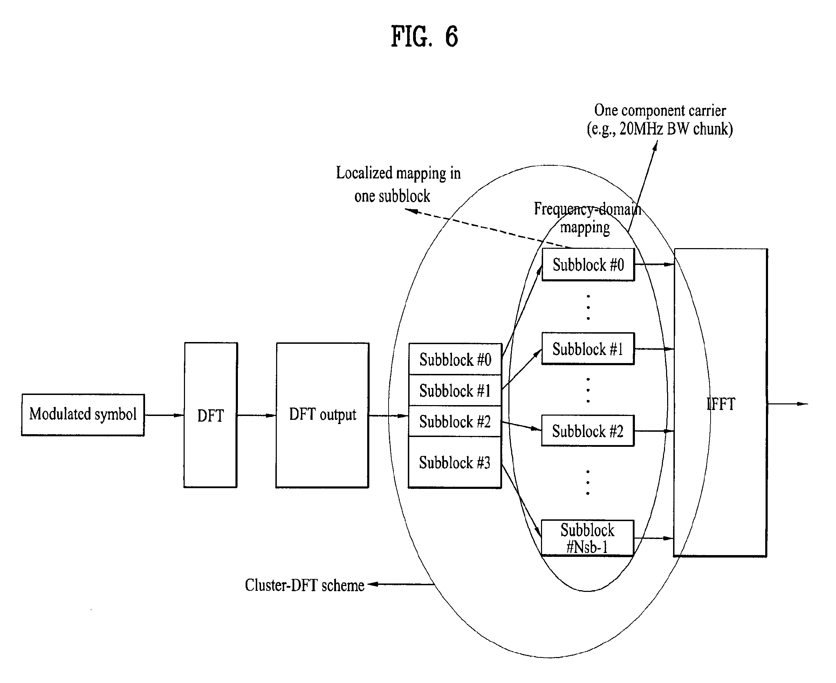

FIG. 6 is a diagram of a signal processing process for mapping DFT process output samples to a single carrier in the clustered SC-FDMA.

FIG. 7 and FIG. 8 are diagrams of a signal processing process for mapping DFT process output samples to a multicarrier in the clustered SC-FDMA.

FIG. 9 is a diagram of a signal processing process in the segmented SC-FDMA.

FIG. 10 is a diagram for describing a signal processing process for transmitting a reference signal (hereinafter abbreviated RS) in UL.

FIG. 11 is a diagram for a structure of a subframe to transmit RS in case of a normal CP. And, FIG. 12 is a diagram for a structure of a subframe to transmit RS in case of an extended CP.

FIG. 13 is a block diagram of a process for processing a transport channel for a UL shared channel.

FIG. 14 is a diagram for describing a mapping method of physical resources for UL data and control channel transmission.

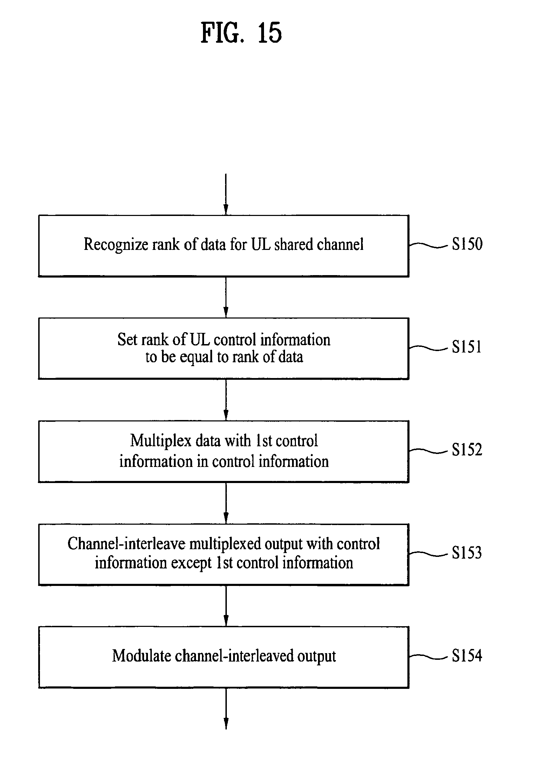

FIG. 15 is a flowchart for a method of efficiently multiplexing data and control channel together on an uplink shared channel according to the present invention.

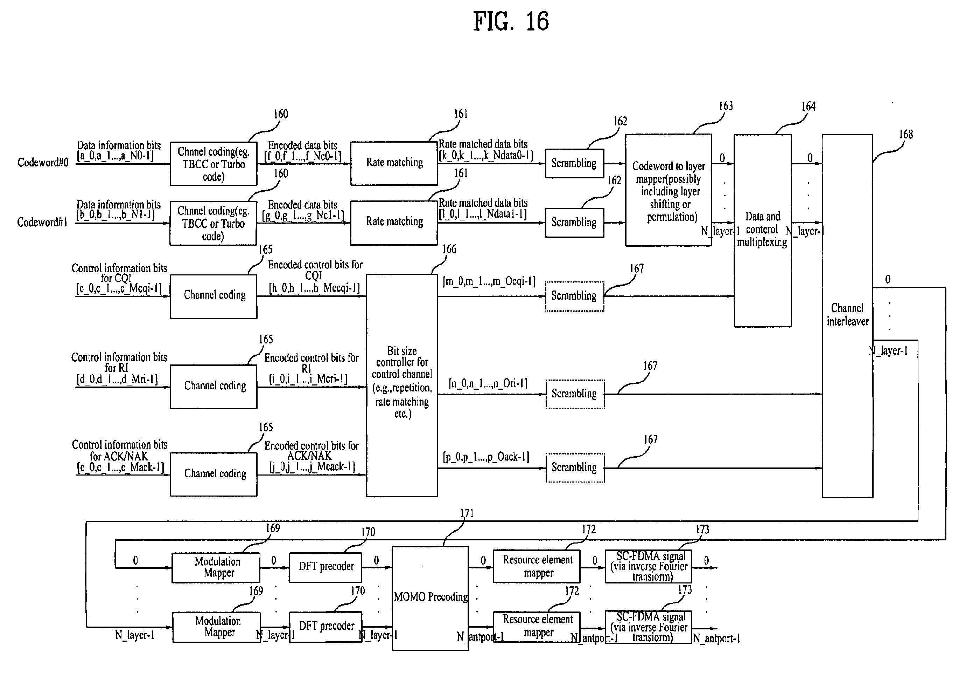

FIG. 16 is a block diagram for describing a method of generating a transmission signal of data and control channel according to the present invention.

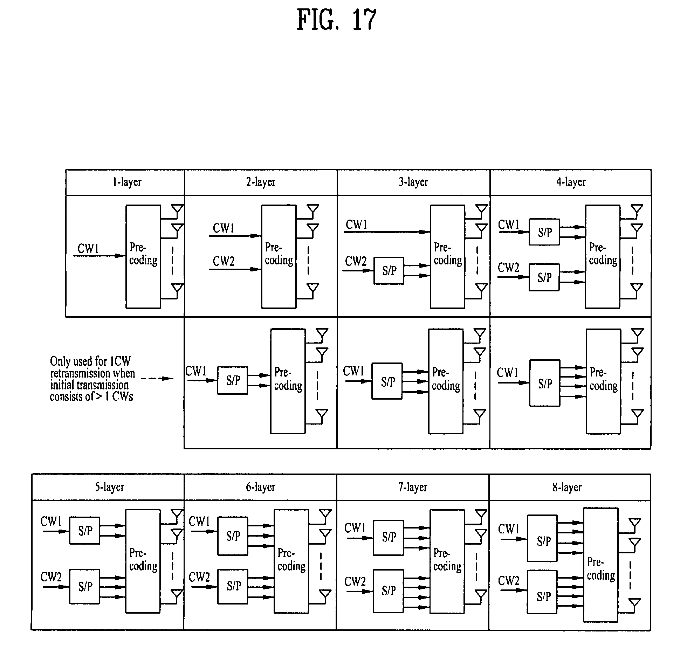

FIG. 17 is a diagram for describing a codeword-to-layer mapping method.

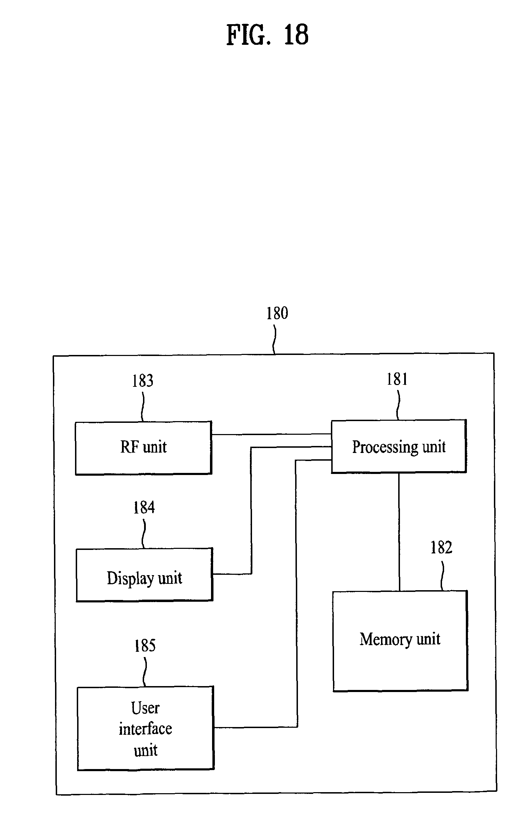

FIG. 18 is a block diagram for a configuration of a device applicable to a base station and a user equipment to implement the present invention.

## MODE FOR INVENTION

Embodiments of the present invention are supportable by standard documents disclosed in at least one of wireless access systems including IEEE (institute of electrical and electronics engineers) 802.16m system, 3GPP system, 3GPP LTE/LTE-A system and 3GPP2 system. In particular, the steps or parts, which are not explained to clearly reveal the technical idea of the present invention, in the embodiments of the present invention can be supported by the above documents.

Moreover, in the following description, specific terminologies are provided to help the understanding of the present invention. And, the use of the specific terminology can be modified into another form within the scope of the technical idea of the present invention.

In the following description, a method of efficiently multiplexing data and a control channel on a UL shared channel by maintaining a single carrier property and compatibility with a legacy system and an apparatus for the same according to the present invention are explained.

FIG. 15 is a flowchart for a method of efficiently multiplexing data and control channel together on an uplink shared channel according to the present invention.

Referring to FIG. 15, a user equipment recognizes a rank for data of a physical uplink shared channel (PUSCH) [S150]. Subsequently, the user equipment sets a rank of a UL control channel (i.e., a control channel may mean such a UL control information (UCI) as CQI, ACK/NACK, RI and the like) to the same rank for the data [S151]. And, the user equipment multiplexes data and control information with each other [S152]. Thereafter, after the data and the CQI have been mapped to each other by a time-first scheme, a channel interleaving may be performed to help the RI to be mapped to a designated RE and to help the ACK/NACK to be mapped by perforating RE in the vicinity of DM-RS [S153].

Thereafter, the data and the control channel may be modulated by one of QPSK, 16QAM, 64QAM and the like in accordance with MCS table [S154]. In doing so, the modulating step may be shifted to another position (e.g., the modulating block may be shiftable before the multiplexing step of the data and the control channel). The channel interleaving may be performed by a codeword unit or a layer unit.

As mentioned in the foregoing description, if the rank of the control channel is restricted to have the same rank of the data, it may provide several advantages in viewpoint of signaling overhead. If a data and a control channel differ from each other in rank, UL DM-RS will be precoded by the same precoding of the data. Hence, an additional PMI signaling may be necessary for the control channel. The same RI for both of the data and the control channel may simplify the multiplexing chain and may be helpful to remove an additional signaling. Although there is one efficient rank for the control channel, a transmitted rank of the control channel may become the rank of the data. In viewpoint of a receiving stage, after MIMO decoder has been applied to each layer, each LLR output may be accumulated by MRC (maximum ratio combining). In this case, the LLR (log-likelihood ratio) may mean an output of a demapper of PSK/QAM and may indicate a value of logarithm operation of a probability indicating whether a corresponding bit is set to 0 or 1. For instance, the LLR may be defined as Formula 1.

[Formula 1]

$$LLR(b_{I,k}) = \log \frac{P[b_{I,k} = 1 | r[i]]}{P[b_{I,k} = 0 | r[i]]}$$

The present invention does not put any limitation on the multiplexing of data and control channel. In particular, the above-mentioned same principle may be applicable to a case of applying TDM (time division multiplexing) to data and control channel as well.
The present invention shall be further described in detail as follows.
For clarity and convenience of the following description, assume 2 codewords for data. Yet, the data is just limited to the 2 codewords for clarity of the following description, by which the number of the codewords is non-limited. In particular, the present invention mentioned in he following description may be identically applicable to at least two or more codewords. Moreover, the present invention mentioned in the following description may be independently applicable per codeword. For example, if a 1st codeword and a 2nd codeword exist, the present invention may be applicable to the 1st codeword only.
FIG. 16 is a block diagram for describing a method of generating a transmission signal of data and control channel according to the present invention. In FIG. 16, a position of each block may be changeable in accordance with an application scheme.
Assuming two codewords, a channel coding may be performed on each of the two codewords [160] and a rating matching may be then performed in accordance with a given MCS table [161]. Thereafter, encoded bits may be scrambled by a cell-specific, UE-specific or codeword-specific scheme [162].
Subsequently, a codeword-to-layer mapping may be performed [163]. In this process, an operation of layer shift or permutation may be included.
FIG. 17 is a diagram for describing a codeword-to-layer mapping method. The codeword-to-layer mapping may be performed using the rule shown in FIG. 17. In FIG. 17, a precoding position may different from the former precoding position shown in FIG. 13.
Such control information as CQI, RI and ACK/NACK may be channel-coded in accordance with a given specification [165]. In doing so, each of the CQI, RI and ACK/NACK may be coded using the same channel code for all codewords or may be coded using a channel code different per codeword.
Afterwards, the number of encoded bits may be changed by a bit size control unit [166]. The bit size control unit may be unified with a channel coding block 165. A signal outputted from the bit size control unit may be scrambled [167]. In doing so, the scrambling may be performed cell-specifically, layer-specifically, codeword-specifically or UE-specifically.
The bit size control unit may work as follows.
(1) The control unit recognizes a rank (n_rank_pusch) of data for PUSCH.
(2) A rank (n_rank_control) of a control channel is set equal to the rank of the data (i.e., n_rank_control = n_rank_pusch). The number of bits for the control channel is extended by being multiplied by the rank of the control channel.
One method for performing this may include the step of copying and repeating a control channel simply. In this case, the control channel may correspond to an information level before the channel coding or a bit level coded after the channel coding. In particular, for instance, in case of a control channel [a0, a1, a2, a3] (i.e., n_bit_ctrl = 4) and 'n_rank_pusch = 2', an extended bit number (n_ext_ctrl) includes [a0, a1, a2, a3, a0, a1, a2, a3] and can become 8 bits.
In case that the bit size control unit and the channel coding unit are configured into one, a coded bit may be generated by applying a channel coding and a rate matching defined in a legacy system (e.g., LTE Rel-8).
In addition to the bit size control unit, a bit level interleaving may be performed to further randomize each layer. Alternatively, interleaving may be equivalently performed at a modulated symbol level.
The CQI/PMI channel and the data for the 2 codewords may be multiplexed by a data/control multiplexer [164]. While ACK/NACK information in both slots of a subframe is mapped to RE in the vicinity of UL DM-RS, the channel interleaver maps the CQI/PMI by a time-first mapping scheme [168].
Modulation is performed on each layer [169]. DFT precoding [170], MIMO precoding [171], RE mapping [172] and the like are sequentially performed. Thereafter, SC-FDMA signal is generated and then transmitted via an antenna port [173].

Positions of the above function blocks may not be limited to the positions shown in FIG. 16 and may be changeable if necessary. For instance, the scrambling blocks 162 and 167 may be positioned next to the channel interleaving block. And, the codeword-to-layer mapping block 163 may be positioned next to the channel interleaving block 168 or the modulation mapper block 169.

The method mentioned in the above description may be performed by a following device. FIG. 18 is a block diagram for a configuration of a device applicable to a base station and a user equipment to implement the present invention. Referring to FIG. 18, a device 100 includes a processing unit 101, a memory unit 102, an RF (radio frequency) unit 103, a display unit 104 and a user interface unit 105. A layer of a physical interface protocol is performed by the processing unit 101. The processing unit 101 provides a control plane and a user plane. A function of each layer can be performed by the processing unit 101. The processing unit 101 may be able to perform the above-described embodiment of the present invention. In particular, the processing unit 101 generates a subframe for a user equipment location determination or may be able to perform a function of determining a location of a user equipment by receiving the subframe. The memory unit 102 is electrically connected to the processing unit 101. And, the memory unit 102 stores operating systems, applications and general files. If the device 100 is a user equipment, the display unit 104 may be able to display various kinds of informations. And, the display unit 104 may be implemented using a well-known device such as an LCD (liquid crystal display), an OLED (organic light emitting diode) display and the like. The user interface unit 105 may be configured by being combined with such a well-known user interface as a keypad, a touchscreen and the like. The RF unit 103 is electrically connected to the processing unit 101. The RF unit 103 transmits or receives a radio signal.

According to the present invention mentioned in the above description, as mentioned in the foregoing description, data and control information are processed in case of a UL transmission. Therefore, signaling overhead may be reduced and system performance may be enhanced.

The aforementioned embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention. The order of operations described in the embodiments of the present invention may be changed. Some structural elements or features of one embodiment may be included in another embodiment, or may be substituted with corresponding structural elements or features of another embodiment.

Moreover, it will be apparent that some claims referring to specific claims may be combined with another claims referring to the other claims other than the specific claims to constitute the embodiment or add new claims by means of amendment after filing the application.

According to the present invention, a user equipment (UE) may be replaced by such a terminology as a mobile station (MS), a subscriber station (SS), a mobile subscriber station (MSS), a mobile terminal and the like.

Moreover, a user equipment of the present invention may include one of PDA (Personal Digital Assistant), cellular phone, PCS (Personal Communication Service) phone, GSM (Global System for Mobile) phone, WCDMA (Wideband CDMA) phone, MBS (Mobile Broadband System) phone and the like.

Embodiments of the present invention can be implemented using various means. For instance, embodiments of the present invention can be implemented using hardware, firmware, software and/or any combinations thereof.

In case of the implementation by hardware, a method according to each embodiment of the present invention can be implemented by at least one selected from the group consisting of ASICs (application specific integrated circuits), DSPs (digital signal processors), DSPDs (digital signal processing devices), PLDs (programmable logic devices), FPGAs (field programmable gate arrays), processor, controller, microcontroller, microprocessor and the like.

In case of the implementation by firmware or software, a method according to each embodiment of the present invention can be implemented by modules, procedures, and/or functions for performing the above-explained functions or operations. Software code is stored in a memory unit and is then drivable by a processor. The memory unit is provided within or outside the processor to exchange data with the processor through the various well-known means.

While the present invention has been described and illustrated herein with reference to the preferred embodiments thereof, it will be apparent to those skilled in the art that various modifications and variations can be made therein without departing from the spirit and scope of the invention. Thus, it is intended that the present invention covers the modifications and variations of this invention that come within the scope of the appended claims and their equivalents. And, it is apparently understandable that an embodiment is configured by combining claims failing to have relation of explicit citation in the appended claims together or can be included as new claims by amendment after filing an application.

## INDUSTRIAL APPLICABILITY

Accordingly, the present invention is applicable to a user equipment, a base station and other equipments in a wireless mobile communication system.

## Claims

1. A method of transmitting an uplink signal, which is transmitted by a user equipment in a wireless mobile communication system supporting MIMO (multiple input multiple output), comprising the steps of:

   setting a rank of uplink control information to a rank of an uplink data;
   multiplexing a 1st control information in the uplink control information with the uplink data;
   channel-interleaving the multiplexed output with the uplink control information except the 1st control information in the uplink control information; and
   transmitting the interleaved signal to a base station using the MIMO.

2. The method of claim 1, wherein the step of setting the rank of the uplink control information to the rank of the uplink data is performed using repetition of a bit of the uplink control information.

3. The method of claim 1, wherein the step of setting the rank of the uplink control information to the rank of the uplink data is performed using a rate matching.

4. The method of claim 1, wherein the 1st control information comprises a channel quality information.

5. The method of claim 1, wherein the uplink control information except the 1st control information comprises either a rank information or an ACK/NACK (acknowledgement/negative acknowledgement) information.

6. A user equipment in a wireless mobile communication system supporting MIMO (multiple input multiple output), comprising:

   a transmitting/receiving unit transmitting an uplink signal to a base station using the MIMO, the transmitting/receiving unit receiving a downlink signal from the base station using the MIMO;
   a processing unit configured to process the downlink signal received from the base station and the uplink signal to transmit to the base station; and
   a memory unit connected to the processing unit to store an operating system program, an application program and a file related to the operating system program or the application program, wherein the processing unit comprises a bit size control unit setting a rank of uplink control information to a rank of an uplink data, a multiplexing unit multiplexing a 1st control information in the uplink control information with the uplink data, and a channel interleaving unit channel-interleaving the multiplexed output with the uplink control information except the 1st control information in the uplink control information.

7. The user equipment of claim 6, wherein the bit size control unit sets the rank of the uplink control information to the rank of the uplink data by repeating a bit of the uplink control information.

8. The user equipment of claim 6, wherein the bit size control unit sets the rank of the uplink control information to the rank of the uplink data using a rate matching.

9. The user equipment of claim 6, wherein the 1st control information comprises a channel quality information.

10. The user equipment of claim 6, wherein the uplink control information except the 1st control information comprises either a rank information or an ACK/NACK (acknowledgement/negative acknowledgement) information.

# FIG. 1

EP 2 518 907 A2

Initial cell
search

System
information
reception

Random access procedure

General DL/UL Tx/Rx
S108

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S101        S102        S103    S104        S105    S106        S107

• DL/UL ACK/NACK
• UE CQI/PMI/rank report
  using PUSCH and PUCCH

# FIG. 2

| 201 | 202 | 203 | 204 | 205 |
|---|---|---|---|---|
| Scrambling module | Modulating mapper | Transform precoder | Resource element mapper | SC-FDMA signal generator |

# FIG. 3

Codeword → | Scrambling module (301) | → | Modulating mapper (302) | → | Layer mapper (303) | → layers → | Precoding module (304) | → | Resource element mapper (305) | → | OFDMA signal generator (306) | → Antenna port

Codeword → | Scrambling module (301) | → | Modulating mapper (302) | → | Layer mapper (303) | → | Precoding module (304) | → | Resource element mapper (305) | → | OFDMA signal generator (306) | → Antenna port

EP 2 518 907 A2

## FIG. 4

- CP: Cyclie Prefix
- PS: Pulse Shaping
- M > N

Subcarrier mapping

$\{x_0, x_1 \ldots, x_{N-1}\}$ One block → Serial-to-parallel converter (401) → N-point IDFT module (402) $\{X_k\}$ → Subcarrier (403) $0\{ \ldots M-1 \ldots 0 \}0\{$ $\{\tilde{x}_t\}$ → M-point IDFT module (404) $\{\tilde{x}_m\}$ → Parallel-to-serial converter (405) → CP attac-hment (406) → $\{\tilde{x}_0, \tilde{x}_1 \ldots, \tilde{x}_{M-1}\}$ One block

SC - FDMA: ☐ + ▨

OFDMA: ☐

EP 2 518 907 A2

# FIG. 5

0 { ...

Output of
DFT process    Input of IFFT process

0 { ...

(a)

0 { ...

(L-1) 0's { ...

Output of
DFT process    Input of IFFT process

(L-1) 0's { ...

(L-1) 0's { ...

0 { ...

(b)

# FIG. 6

# FIG. 7

One component carrier #0
(e.g., 20MHz BW chunk)

One component carrier #1
(e.g., 20MHz BW chunk)

Localized mapping in
one subblock

Frequency-domain
mapping

Subblock #0

Subblock #1

IFFT

Subblock #2

Subblock
#Nsb-1

Cluster-DFT scheme

One component carrier
#Nsb-1 (e.g., 20MHz BW chunk)

Modulated symbol → DFT → DFT output

Subblock #0
Subblock #1
Subblock #2
Subblock #3

EP 2 518 907 A2

# FIG. 8

EP 2 518 907 A2

# FIG. 9

EP 2 518 907 A2

# FIG. 10

S11 — RS generation → S12 — Localized mapping → S13 — IFFT → S14 — CP attachment

# FIG. 11

Case of normal CP

1 SC-FDMA symbol

1 slot

1 subframe

RS

# FIG. 12

Case of extended CP

1 SC-FDMA symbol

1 slot

1 subframe

RS

# FIG. 13

# FIG. 14

# FIG. 15

Recognize rank of data for UL shared channel — S150

Set rank of UL control information
to be equal to rank of data — S151

Multiplex data with 1st control
information in control information — S152

Channel-interleave multiplexed output with control
information except 1st control information — S153

Modulate channel-interleaved output — S154

# FIG. 16

## FIG. 17

# FIG. 18

180

| RF unit | | Processing unit |
| 183 | | 181 |

184
Display unit

182
Memory unit

185
User
interface
unit